# FASCICULE DE BREVET EUROPEEN

(11) **EP 3 642 644 B1**
(45) Date de publication et mention de la délivrance du brevet: **20.09.2023**
(21) Numéro de dépôt: 18735223.2
(22) Date de dépôt: 21.06.2018
(51) Int. Cl.: G01S 5/02

(54) **DISPOSITIF POUR LE DIAGNOSTIC DE SYSTEMES OPTRONIQUES ET PROCEDE ASSOCIE**
VORRICHTUNG ZUR DIAGNOSE OPTOELEKTRONISCHER SYSTEME UND ZUGEHÖRIGES VERFAHREN
DEVICE FOR THE DIAGNOSIS OF OPTOELECTRONIC SYSTEMS AND ASSOCIATED METHOD

(30) Priorité: 21.06.2017 FR 1755636
(43) Date de publication de la demande: 29.04.2020
(73) Titulaire: Leosphere, 75008 Paris (FR)
(72) Inventeur: SARRY, Julien, San Francisco, CA 94110 (US)
(74) Mandataire: IPAZ
(86) Numéro de dépôt international: PCT/EP2018/066609
(87) Numéro de publication internationale: WO 2018/234467

(56) Documents cités:
- US-A- 4 432 640
- US-A1- 2016 282 453
- US-B1- 7 064 817

## Description

### Domaine technique

La présente invention se rapporte au domaine des systèmes optroniques comprenant un système d'émission et/ou de réception de faisceaux optiques et en particulier aux systèmes optroniques émettant un ou plusieurs faisceaux laser. L'invention a trait, en outre, aux systèmes optroniques dont le ou les faisceaux laser émis sont mis en forme spatialement par l'intermédiaire de dispositifs opto-mécaniques complexes. Les systèmes optroniques visés sont les systèmes LIDAR.

La présente invention concerne un dispositif de mesure de paramètres de faisceaux optiques émis par un LIDAR et un procédé associé. L'invention permet, en outre, de dresser un diagnostic du LIDAR, en particulier à partir de caractéristiques spatiales des faisceaux optiques mesurées avec une qualité métrologique, afin de calibrer, par exemple en sortie de la chaîne de fabrication, le LIDAR. A titre d'exemple, les mesures réalisées permettent, entres autres, de déterminer un écart angulaire entre la position spatiale de l'axe de propagation du faisceau mesuré par le dispositif de mesure et la position spatiale de l'axe de propagation du faisceau théorique.

### Etat de la technique antérieure

On connait dans l'état de la technique des procédés de mesure pour la calibration de dispositifs LIDAR. Ces procédés de mesure sont mis en oeuvre en extérieur par des utilisateurs et sont opérateurs dépendants. Afin d'atténuer la dépendance de la mesure à l'opérateur qui la conduit, une cible dure manipulée par un opérateur est positionnée à grande distance du LIDAR. En dépit des grandes distances, typiquement supérieures à cent mètres, il persiste toujours une influence de l'opérateur sur la mesure. De plus, la manipulation des cibles dures par les opérateurs associée aux grandes distances séparant le LIDAR des cibles, rendent le temps de mise en oeuvre du procédé significativement long. Un autre problème indissociable des procédés connus de l'état de la technique réside dans le fait que, compte tenu des grandes distances parcourues par les faisceaux en extérieur, conditions atmosphériques entrainent une variabilité significative des mesures et peuvent même les empêcher.

On connait également dans l'état de la technique, le document US2016/282453A1 qui décrit une méthode d'ajustement de la position relative, dans le boitier d'un LIDAR, des blocs de transmission et de réception du LIDAR.

Un but de l'invention est notamment de proposer un procédé et un dispositif permettant de palier au moins en partie aux inconvénients précités.

Un autre but est de proposer un procédé et un dispositif permettant de réaliser de telles mesures en intérieur.

### Exposé de l'invention

A cet effet, selon un premier aspect de l'invention, il est proposé un procédé de mesure de paramètres d'un faisceau optique émis par un LIDAR ledit procédé comprenant :
- un calcul d'une position d'une zone de fixation d'un système de mise en mouvement sur laquelle est fixé un dispositif optique, de manière à ce qu'un axe d'alignement de la zone de fixation soit confondu avec un axe d'émission prévu du faisceau optique, le calcul étant réalisé à partir de données caractéristiques du LIDAR,
- un positionnement de la zone de fixation, par le système de mise en mouvement, relativement au LIDAR, dans la position calculée,
- une mesure d'un ou de plusieurs paramètres du faisceau optique par le dispositif optique.

Il est entendu par paramètres du faisceau optique toute caractéristique du faisceau, telle que, entre autre, un paramètre vectoriel, un paramètre spatial, un paramètre temporel, un paramètre fréquentiel, un paramètre géométrique, un paramètre physique, par exemple une intensité, un paramètre de phase. Le terme LIDAR connu de l'homme du métier est un acronyme issu du terme anglais « LIght Détection And Ranging ».

Le système de mise en mouvement peut être un système de mise en mouvement à pilotage automatique tel que, entre autre, un bras robotique ou hexapod ou toute plateforme d'inclinaison.

Le bras robotique peut être articulé.

Le système de mise en mouvement à pilotage automatique peut être industriel.

La zone de fixation peut être une surface du système de mise en mouvement dont un positionnement et une inclinaison sont contrôlés.

Le capteur optique est confondu avec un plan focal du dispositif optique.

Il est entendu par axe d'émission prévu du faisceau optique, l'axe d'émission théorique selon lequel devrait être émis ledit faisceau optique.

Il peut être entendu par « positionnement » d'un objet, l'association d'une position dans l'espace et d'une orientation dudit objet.

L'axe d'alignement de la zone de fixation s'étend à partir de la zone de fixation et le système de mise en mouvement est agencé pour positionner dans l'espace la zone de fixation et pour orienter ledit axe d'alignement de la zone de fixation.

Le calcul de la position de la zone de fixation peut, entre autre, permettre d'obtenir un ensemble de couples de données, chaque couple de données comprenant une position et une orientation de la zone de fixation.

Avantageusement, le positionnement de la zone de fixation est réalisé à une distance inférieure à quatre mètres, de préférence inférieure à deux mètres, de préférence encore inférieure à un mètre du LIDAR. Avantageusement, le positionnement de la zone de fixation est réalisé à une distance comprise entre cinq et trente centimètres du LIDAR.

Le procédé peut comprendre une détermination par une unité de traitement, à partir du ou des paramètres mesurés :
- d'un positionnement spatial d'un vecteur représentatif du faisceau optique, et/ou
- de caractéristiques spectrales du faisceau optique, et/ou
- de caractéristiques temporelles du faisceau optique, et/ou
- d'un taux de polarisation du faisceau optique, et/ou
- d'une qualité de propagation gaussienne du faisceau optique, et/ou
- de caractéristiques liées à la phase du faisceau optique et/ou
- d'un front d'onde du faisceau optique, et/ou
- d'une efficacité du LIDAR, et/ou
- d'une puissance optique du faisceau optique.

Un vecteur représentatif du faisceau optique peut, par exemple, être défini par une position de départ dans l'espace du faisceau optique, pouvant par exemple être assimilée au point de sortie du LIDAR, et une direction définie dans un référentiel.

Le procédé peut comprendre :
- une acquisition d'une première position du faisceau optique sur le capteur optique du dispositif optique, le dispositif optique étant une caméra,
- au moins une étape de rotation de la zone de fixation par rapport à l'axe d'alignement de la zone de fixation, un axe optique de la caméra décrivant un mouvement de précession autour de l'axe d'émission prévu,
- concomitamment ou subséquemment à l'au moins une étape de rotation, une acquisition d'au moins une deuxième position du faisceau optique sur le capteur optique,
- à partir des positions du faisceau optique sur le capteur optique, une détermination d'un écart angulaire entre l'axe d'émission prévu du faisceau optique et un axe d'émission réel du faisceau optique.

Le dispositif optique est choisi en fonction du paramètre mesuré.

La caméra est équipée d'un objectif choisi de manière avantageuse.

La caméra est équipée d'un objectif qui peut être choisi en fonction du paramètre mesuré.

Le mouvement de précession de l'axe optique de la caméra autour de l'axe d'émission prévu est provoqué par un défaut d'alignement de l'axe optique de la caméra avec l'axe d'alignement de la zone de fixation.

Le défaut d'alignement de l'axe optique de la caméra par rapport à l'axe d'alignement de la zone de fixation, implique qu'après une rotation de la zone de fixation par rapport à l'axe, l'au moins une deuxième position du faisceau optique sur le capteur sera différente de la première position du faisceau optique sur le capteur.

Le défaut d'alignement de l'axe optique de la caméra par rapport à l'axe d'alignement de la zone de fixation, implique qu'une position du faisceau optique sur le capteur optique est une position d'un foyer optique fictif.

L'acquisition d'au moins une deuxième position du faisceau optique sur le capteur optique permet de déterminer l'écart angulaire à partir des deux positions du faisceau optique sur le capteur, du sens de rotation de la zone de fixation et de l'angle de rotation effectué durant l'étape de rotation.

Lorsque l'étape d'acquisition de l'au moins une deuxième position du faisceau optique sur le capteur est réalisée subséquemment à l'au moins une étape de mise en rotation et que la rotation de la zone de fixation par rapport à l'axe d'alignement de la zone de fixation est supérieure ou inférieure de plus de un degré par rapport à un angle de 180°, l'étape d'acquisition de l'au moins une deuxième position comprend au moins :
- une acquisition d'une deuxième position, et
- une acquisition d'une troisième position.

Lorsque le procédé comprend l'acquisition d'au moins une deuxième position du faisceau optique sur le capteur optique, le procédé peut comprendre une détermination :
- d'une position d'un foyer optique réel de la caméra sur le capteur optique par l'unité de traitement, la position du foyer optique réel correspondant à la position d'un centre d'un cercle reliant la première et l'au moins une deuxième position du faisceau optique sur le capteur optique,
- de l'axe d'émission réel du faisceau optique, ledit axe comprenant la position du foyer optique réel sur le capteur optique et un centre optique de la caméra.

La détermination de la position du foyer optique réel permet de s'affranchir de tout défaut d'alignement du dispositif optique par rapport à l'axe d'alignement de la zone de fixation.

Lorsque l'étape d'acquisition d'au moins une deuxième position est réalisée subséquemment à l'au moins une étape de mise en rotation et que la rotation de la zone de fixation par rapport à l'axe d'alignement de la zone de fixation est sensiblement égale à un angle de 180°, l'étape d'acquisition d'au moins une deuxième position peut comprendre l'acquisition d'uniquement une deuxième position.

Lorsque l'étape d'acquisition d'au moins une deuxième position comprend l'acquisition d'uniquement une deuxième position, le procédé peut comprendre la détermination :
- de la position du foyer optique réel de la caméra sur le capteur optique par l'unité de traitement, la position du foyer optique réel correspondant à un milieu d'une droite reliant la première position à la deuxième position,
- de l'axe d'émission réel du faisceau optique, ledit axe comprenant la position du foyer optique réel sur le capteur optique et le centre optique de la caméra.

Un écart angulaire maximal entre l'axe d'émission prévu du faisceau optique et un axe d'émission réel du faisceau optique est inférieur à ±15° de sorte que le faisceau émis soit focalisé par la caméra sur le capteur optique.

L'écart angulaire maximal est inférieur à ±10°, de préférence à ±5°. Avantageusement, l'écart angulaire est inférieur à ±2°.

Le procédé peut comprendre au moins une itération des étapes :
- d'acquisition de la première position du faisceau optique sur le capteur optique,
- d'au moins une rotation de la zone de fixation par rapport à l'axe d'alignement de la zone de fixation,
- d'acquisition de l'au moins une deuxième position du faisceau optique sur le capteur optique, et
- de détermination :
   - de l'écart angulaire entre l'axe d'émission prévu du faisceau optique et de l'axe d'émission réel du faisceau optique, et/ou
   - d'une position d'un foyer optique réel de la caméra sur le capteur optique, et/ou
   - de l'axe d'émission réel du faisceau optique et/ou
   - de la différence entre l'angle prévu entre deux faisceaux optiques et l'angle réel entre deux faisceaux optiques ;
chaque itération étant réalisée à un positionnement différent de la zone de fixation le long de l'axe d'émission prévu du faisceau optique.

Autrement dit, pour la première itération, la zone de fixation est positionnée :
- en direction du point de sortie du LIDAR,
- le long de l'axe d'émission prévu du faisceau optique,
- à une distance du point de sortie du LIDAR qui est différente de la distance du point de sortie du LIDAR à laquelle était positionnée la zone de fixation lors de la précédente mise en oeuvre des étapes :
   - d'acquisition de la première position du faisceau optique sur le capteur optique,
   - d'au moins une rotation de la zone de fixation par rapport à l'axe d'alignement de la zone de fixation,
   - d'acquisition de l'au moins une deuxième position du faisceau optique sur le capteur optique.

Autrement dit, pour chaque itération, la zone de fixation est positionnée :
- en direction du point de sortie du LIDAR,
- le long de l'axe d'émission prévu du faisceau optique,
- à une distance du point de sortie du LIDAR
qui est différente de chacune des autres distances du point de sortie du LIDAR auxquelles est positionnée la zone de fixation lors de la mise en oeuvre des autres itérations.

Le procédé peut comprendre un calcul d'une ou de plusieurs différences, dite de contrôle, entre :
- l'écart angulaire entre l'axe d'émission prévu du faisceau optique et l'axe d'émission réel du faisceau optique déterminé lors d'une itération et l'écart angulaire entre l'axe d'émission prévu du faisceau optique et l'axe d'émission réel du faisceau optique déterminé lors d'une autre itération, et/ou
- l'axe d'émission réel du faisceau optique déterminé lors d'une itération et l'axe d'émission réel du faisceau optique déterminé lors d'une autre itération, et/ou
- la différence entre l'angle prévu entre deux faisceaux optiques et l'angle réel entre deux faisceaux optiques déterminé lors d'une itération et la différence entre l'angle prévu entre deux faisceaux optiques et l'angle réel entre deux faisceaux déterminé(s) lors d'une autre itération.

Dans le cas où une valeur de la différence de contrôle, ou une valeur d'une des différences de contrôle, ou des valeurs de différences de contrôle, est supérieure à l'exactitude métrologique du système de mise en mouvement, cela indique:
- un défaut de défaut de mise en oeuvre du procédé, et/ou
- un défaut de calibration du système de mise en mouvement, et/ou
- un défaut de calibration du LIDAR.

Le procédé peut comprendre :
- un ajustement d'une inclinaison du LIDAR au moyen d'un inclinomètre du LIDAR,
- une calibration de l'inclinomètre, au moyen de l'unité de traitement, à partir de l'écart angulaire entre l'axe d'émission prévu du faisceau optique et un axe d'émission réel du faisceau optique déterminé.

L'ajustement de l'inclinaison du LIDAR peut être réalisé préalablement à la mise en oeuvre du procédé selon l'invention.

Le LIDAR peut être monté sur un support ajustable relativement à un plan horizontal.

Le support ajustable peut être agencé pour ajuster l'inclinaison du LIDAR relativement au plan horizontal.

L'inclinomètre peut être placé dans le LIDAR.

Selon l'invention, le LIDAR peut émettre plusieurs faisceaux optiques, le procédé étant appliqué de manière successive à chacun desdits faisceaux optiques.

Les faisceaux optiques peuvent être émis par une même source optique.

Les faisceaux optiques émis par le LIDAR peuvent être spatialement distincts.

Les faisceaux optiques émis par une même source optique peuvent être orientés de manière successive dans des directions différentes au cours du temps.

Les faisceaux optiques émis par le LIDAR peuvent être agencés spatialement les uns par rapport aux autres.

Les faisceaux optiques émis par le LIDAR peuvent être agencés spatialement relativement au système optronique.

Lorsque le LIDAR émet plusieurs faisceaux optiques, le procédé peut comprendre une détermination, par l'unité de traitement, d'une différence entre un angle prévu entre deux faisceaux optiques et un angle réel entre deux faisceaux optiques.

Selon le premier aspect de l'invention :
- le système de mise en mouvement peut être un bras robotique,
- la zone de fixation peut être une surface du bras robotique dont un positionnement et une inclinaison sont contrôlés.

Selon un second aspect de l'invention, il est proposé un dispositif de mesure de paramètres d'un faisceau optique émis par un LIDAR, ledit dispositif de mesure comprenant :
- un support apte à recevoir le LIDAR et agencé pour modifier un positionnement du LIDAR.

Selon l'invention, le dispositif de mesure est caractérisé en ce qu'il comprend, en outre :
- un système de mise en mouvement à pilotage automatique comportant une zone de fixation apte à être mise en mouvement selon plusieurs axes,
- un dispositif optique fixé à ladite zone de fixation du système de mise en mouvement,
- le système de mise en mouvement est agencé pour positionner la zone de fixation relativement au LIDAR et orienter un axe d'alignement de la zone de fixation de sorte que l'axe d'alignement coïncide avec un axe d'émission prévu du faisceau optique,
- le dispositif optique est agencé pour mesurer un ou des paramètres du faisceau optique.

Lorsque le LIDAR émet plusieurs faisceaux optiques, le ou les paramètres d'un faisceau optique mesurés peuvent être communs à tous les faisceaux optiques.

Lorsque le LIDAR émet plusieurs faisceaux optiques, un paramètre d'un faisceau optique peut être différent :
- d'un paramètre d'un autre faisceau optique émis par le LIDAR, et/ou
- d'un paramètre commun à d'autres faisceaux optiques émis par le LIDAR, et/ou
- d'un paramètre commun à tous les autres faisceaux optiques émis par le LIDAR, et/ou
- de paramètres d'un autre faisceau optique émis par le LIDAR, et/ou
- de paramètres d'autres faisceaux optiques émis par le LIDAR, et/ou
- de paramètres communs à d'autres faisceaux optiques émis par le LIDAR, et/ou
- de paramètres communs à tous autres faisceaux optiques émis par le LIDAR.

La zone de fixation peut être une surface du système de mise en mouvement dont un positionnement et une inclinaison sont contrôlés par ledit système de mis en mouvement.

Avantageusement, la zone de fixation peut être mise en mouvement selon six axes.

Un pas maximum d'un déplacement de la zone de fixation par le système de mise en mouvement est de 1 mm, de préférence de 0,5 mm.

Avantageusement, le pas de déplacement est de 0,1 mm.

Un pas maximum d'une rotation de la zone de fixation par le système de mise en mouvement est de 0,05°, de préférence de 0,025°.

Avantageusement, le pas de déplacement est de 0,01°.

Le dispositif peut comprendre une unité de traitement configurée et/ou programmée pour calculer un axe d'émission prévu du faisceau optique, à partir de données caractéristiques du LIDAR.

L'unité de traitement peut être configurée et/ou programmée pour calculer une position de la zone de fixation pour laquelle l'axe d'alignement de la zone de fixation est aligné avec l'axe d'émission prévu du faisceau optique.

La position de la zone de fixation calculée par l'unité de traitement peut être définie, entre autre, par un ensemble de couples de données, chaque couple de données comprenant une position et une orientation de la zone de fixation.

Le système de mise en mouvement à pilotage automatique peut être un bras robotique ou hexapod ou toute plateforme d'inclinaison et la zone de fixation apte à être mise en mouvement est une surface du système de mise en mouvement, ladite surface étant agencée pour être mise en rotation autour de l'axe d'alignement de la zone de fixation.

Le système de mise en mouvement à pilotage automatique peut être un dispositif industriel.

Le bras robotique peut être un hexapod. Il est entendu par hexapod un dispositif apte à être mis en mouvement par l'intermédiaire de six éléments.

La zone de fixation peut être une zone située à une extrémité du bras robotique.

L'axe d'alignement de la zone de fixation peut s'étendre à partir de la zone de fixation et selon une direction prédéfinie.

L'axe d'alignement de la zone de fixation peut s'étendre à partir de l'extrémité du bras robotique et selon une direction prédéfinie.

Le support peut être principalement compris dans un plan et est agencé pour ajuster, entre autre, l'angle formé entre un plan horizontal et le plan dans lequel est compris le support.

Avantageusement, le support est agencé pour ajuster une inclinaison du support par rapport à un plan horizontal.

Avantageusement, le support est agencé pour ajuster une orientation azimutale du support.

Un ajustement de l'inclinaison du support peut être réalisé à partir d'une valeur d'inclinaison mesurée par un inclinomètre du LIDAR.

Le dispositif optique peut être agencé pour mesurer, entres autres :
- un positionnement spatial d'un vecteur représentatif du faisceau optique, et/ou
- une ou des caractéristiques spectrales du faisceau optique, et/ou
- une ou des caractéristiques temporelles du faisceau optique, et/ou
- un taux de polarisation du faisceau optique, et/ou
- une qualité de propagation gaussienne du faisceau optique, et/ou
- une ou des caractéristiques liées à la phase du faisceau optiques et/ou
- un front d'onde du faisceau optique, et/ou
- une efficacité du LIDAR, et/ou
- une puissance optique du faisceau optique.

Le dispositif optique peut être, entre autre :
- un analyseur de front d'onde, ou
- un dispositif d'étalonnage d'un LIDAR, ou
- un dispositif de mesure de puissance optique.

Le dispositif de mesure peut comprendre plusieurs dispositifs optiques.

Le dispositif de mesure peut comprendre :
- un analyseur de front d'onde, et/ou
- un dispositif d'étalonnage d'un LIDAR, et/ou
- un dispositif de mesure de puissance optique.

Lorsque le dispositif de mesure comprend plusieurs dispositifs optiques, chaque dispositif optique peut être relié à un système de mise en mouvement différent, le dispositif de mesure comprenant l'ensemble des systèmes de mise en mouvement.

Lorsque le dispositif de mesure comprend plusieurs dispositifs optiques, un seul des dispositifs optiques à la fois peut être relié à la zone de fixation, les dispositifs optiques y sont inter-changés successivement de manière automatisée et/ou manuelle.

Lorsque le dispositif de mesure comprend plusieurs dispositifs optiques, l'ensemble des dispositifs optiques peuvent être reliés concomitamment à la zone de fixation du dispositif de mise en mouvement.

Lorsque l'ensemble des dispositifs optiques sont reliés concomitamment à la zone de fixation du dispositif de mise en mouvement, un seul des dispositifs optiques peut être positionné de manière à ce que l'axe d'émission prévu du faisceau optique soit focalisé sur le capteur optique dudit dispositif optique.

Lorsque l'ensemble des dispositifs optiques sont reliés concomitamment à la zone de fixation du dispositif de mise en mouvement, l'ensemble des dispositifs optiques peuvent être agencés de sorte à ce que l'axe d'émission prévu du faisceau optique soit focalisé de manière successive sur chacun des capteurs optiques des dispositifs optiques.

Lorsque l'ensemble des dispositifs optiques sont reliés concomitamment à la zone de fixation du dispositif de mise en mouvement, l'ensemble des dispositifs optiques peuvent être agencés pour être mis en mouvement de sorte à ce que l'axe d'émission prévu du faisceau optique soit focalisé de manière successive sur chacun des capteurs optiques des dispositifs optiques.

Selon l'invention :
- le dispositif optique peut être une caméra,
- un axe optique de la caméra décrit un mouvement de précession autour de l'axe de l'alignement,
- la caméra est agencée pour :
   - mesurer un positionnement spatial d'un vecteur représentatif du faisceau optique,
   - être mise en rotation autour de l'axe d'alignement de la zone de fixation,
- l'unité de traitement est configurée et/ou programmé pour déterminer un écart angulaire entre un axe d'émission prévu du faisceau optique et un axe d'émission réel dudit faisceau optique à partir d'au moins deux positions dudit faisceau optique sur un capteur optique de la caméra, lesdites au moins deux positions du faisceau optique comprenant au moins une position acquise ultérieurement et/ou concomitamment et/ou ou subséquemment à la mise en rotation de la caméra.

Avantageusement, le capteur optique de la caméra est un capteur CCD.

Le capteur optique de la caméra peut être un capteur CMOS.

Avantageusement, le capteur optique de la caméra présente un nombre de pixels minimum de 1 Mégapixels.

De manière d'avantage préférée, le nombre de pixels est de 1,2 Mégapixels.

Avantageusement, le capteur optique de la caméra présente une taille de pixel minimum de 10 × 10 µm, de préférence 5 × 5 µm.

De manière d'avantage préférée, la taille de pixel est de 3,75 × 3,75 µm.Le mouvement de précession de l'axe optique de la caméra autour de l'axe d'émission prévu est provoqué par un défaut d'alignement de l'axe optique de la caméra avec l'axe d'alignement de la zone de fixation.

Le défaut d'alignement de l'axe optique de la caméra avec l'axe d'alignement de la zone de fixation est inférieur à un angle de ±2°.

Lorsque l'unité de traitement est configurée et/ou programmé pour déterminer l'écart angulaire entre l'axe d'émission prévu du faisceau optique et l'axe d'émission réel dudit faisceau optique, l'unité de traitement peut être configurée et/ou programmée pour déterminer :
- une position d'un foyer optique réel de la caméra sur le capteur optique, la position du foyer optique réel correspondant à la position d'un centre d'un cercle reliant lesdites au moins deux positions du faisceau optique sur le capteur optique,
- l'axe d'émission réel du faisceau optique, ledit axe d'émission réel comprenant la position du foyer optique réel sur le capteur optique et un centre optique de la caméra.

Lorsque l'unité de traitement est configurée et/ou programmé pour déterminer l'écart angulaire entre l'axe d'émission prévu du faisceau optique et l'axe d'émission réel dudit faisceau optique, à partir d'uniquement deux positions sur le capteur optique de la caméra, l'unité de traitement peut être configurée et/ou programmée pour déterminer :
- la position du foyer optique réel de la caméra sur le capteur optique, la position du foyer optique réel correspondant à un milieu d'une droite reliant la première position à la deuxième position du faisceau optique sur le capteur optique,
- l'axe d'émission réel du faisceau optique, ledit axe comprenant la position du foyer optique réel sur le capteur optique et le centre optique de la caméra.

Lorsque l'unité de traitement est configurée et/ou programmé pour déterminer l'écart angulaire entre l'axe d'émission prévu du faisceau optique et l'axe d'émission réel dudit faisceau optique, l'unité de traitement peut être configurée et/ou programmée pour appliquer l'étape de détermination d'un écart angulaire à un ensemble de faisceaux émis par le LIDAR.

Lorsque le LIDAR émet plusieurs faisceaux optiques, le ou les paramètres d'un faisceau optique mesurés peuvent être communs à tous les faisceaux optiques.

Lorsque le LIDAR émet plusieurs faisceaux optiques, un paramètre d'un faisceau optique peut être différent :
- d'un paramètre d'un autre faisceau optique émis par le LIDAR, et/ou
- d'un paramètre commun à d'autres faisceaux optiques émis par le LIDAR, et/ou
- d'un paramètre commun à tous les autres faisceaux optiques émis par le LIDAR, et/ou
- de paramètres d'un autre faisceau optique émis par le LIDAR, et/ou
- de paramètres d'autres faisceaux optiques émis par le LIDAR, et/ou
- de paramètres communs à d'autres faisceaux optiques émis par le LIDAR, et/ou
- de paramètres communs à tous autres faisceaux optiques émis par le LIDAR.

Les faisceaux optiques émis par le LIDAR peuvent être spatialement distincts.

Les faisceaux optiques émis par le LIDAR peuvent être agencés spatialement les uns par rapport aux autres.

Selon un troisième aspect de l'invention, il est proposé une utilisation du dispositif de mesure selon le second aspect de l'invention, dans lequel le dispositif optique est une caméra et dans lequel l'unité de traitement est configurée et/ou programmé pour déterminer une différence entre :
- un angle prévu entre deux faisceaux optiques émis par un LIDAR, et
- un angle réel entre lesdits deux faisceaux optiques émis par le LIDAR.

Selon un quatrième aspect de l'invention, il est proposé une utilisation du dispositif de mesure selon le second aspect de l'invention, dans lequel le dispositif optique est une caméra et dans lequel l'unité de traitement est configurée et/ou programmé pour calibrer un inclinomètre d'un LIDAR à partir d'une différence entre :
- un angle prévu entre deux faisceaux optiques émis par le LIDAR et un angle réel entre lesdits deux faisceaux optiques émis par le LIDAR, et/ou
- des angles prévus entre plusieurs faisceaux optiques émis par le LIDAR et des angles réels entre lesdits plusieurs faisceaux optiques émis par le LIDAR.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la FIGURE 1 est une représentation schématique d'un dispositif de mesure selon le deuxième aspect de l'invention et d'un LIDAR,
- les FIGURES 2a et 2b sont deux représentations schématiques, dans deux positions différentes d'un objectif et d'un capteur d'une caméra du dispositif de mesure, d'un axe d'émission prévu d'un des faisceaux émis par le LIDAR, d'un axe d'émission réel dudit un des faisceaux émis par LIDAR, et d'un axe optique, d'un objectif et d'un capteur de la caméra,
- la FIGURE 3 est une représentation schématique de positions d'un faisceau optique émis par le LIDAR sur un capteur de la caméra,
- les FIGURES 4a, 4b, 4c et 4d sont des représentations schématiques du capteur, de l'objectif et de faisceaux émis par le LIDAR, dans des positions illustrant respectivement :
   - une position théorique d'un axe optique de la caméra par rapport à l'axe d'émission prévu du faisceau émis par le LIDAR,
   - un défaut d'alignement entre l'axe optique de la caméra et l'axe d'émission prévu du faisceau émis par le LIDAR,
   - une première position du dispositif de mesure dans laquelle l'axe optique de la caméra et l'axe d'alignement présentent un défaut d'alignement entre eux, et dans laquelle l'axe d'émission prévu et l'axe d'émission réel du faisceau optique présentent un écart angulaire entre eux,
   - une deuxième position correspondant à une rotation de 180°, par rapport à la première position, de la caméra autour de l'axe d'alignement.

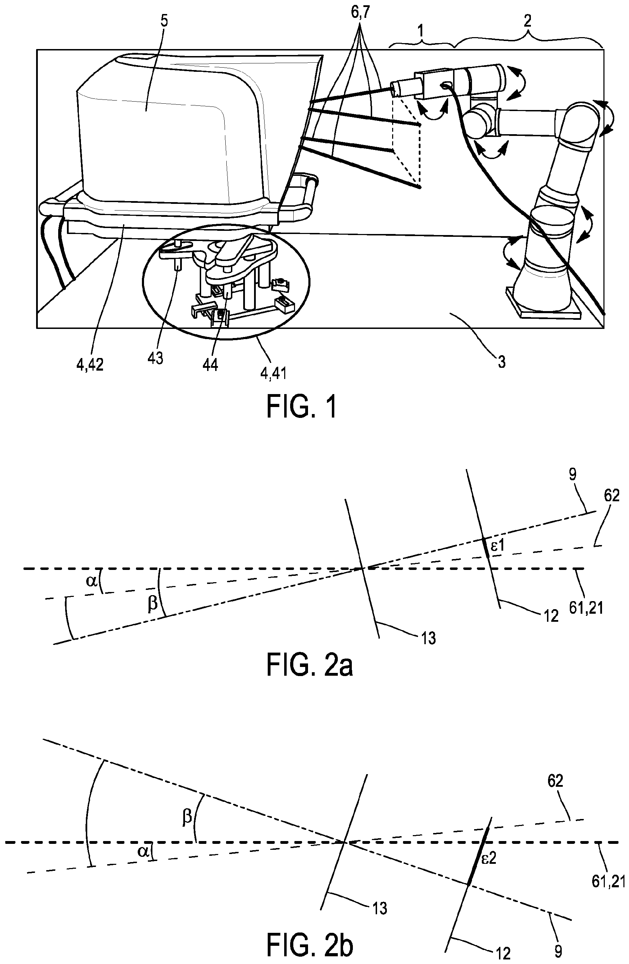

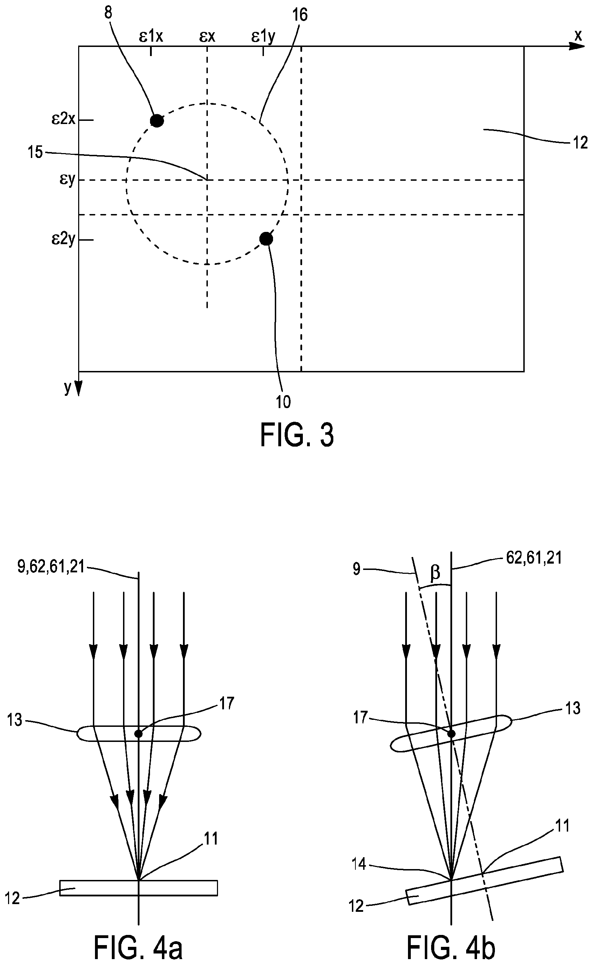

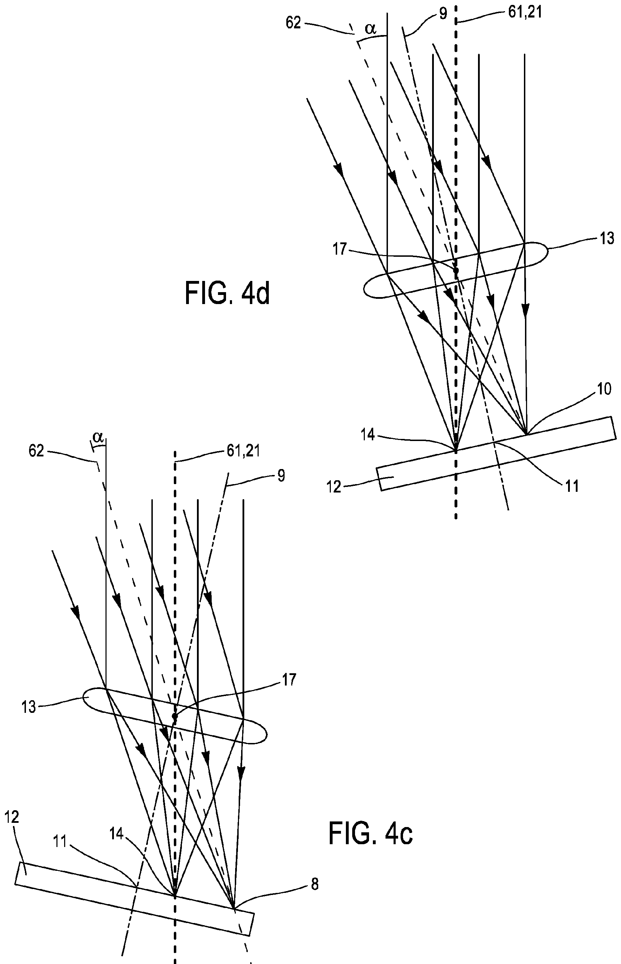

En référence aux FIGURES 1, 2, 3 et 4, il est décrit un mode de réalisation du dispositif de mesure 1,2,3,4, et du procédé de mesure, de la position d'axes d'émission 6 de chacun de quatre faisceaux optiques émis 7 par un LIDAR 5. Les quatre faisceaux émis 7 par le LIDAR sont distincts et mise en forme spatialement selon une géométrie définie.

Le dispositif de mesure comprend une table optique 3 sur laquelle est monté un support 4 sur lequel est fixé le LIDAR 5. Une caméra 1 est fixée sur une zone de fixation (non visible) située à l'extrémité d'un bras robotisé 2. L'extrémité du bras robotisé 2 présente six degrés de liberté conférés par les différentes articulations (non référencées) du bras robotisé 2. La caméra 1 peut être positionnée avec une précision de ±0,5 mm, et la caméra 1 peut être mise en rotation autour d'un axe d'alignement 21 de la zone de fixation, avec une précision de ±0,05°. L'axe d'alignement 21 correspond à la direction s'étendant à partir de l'extrémité du bras robotisé 2 selon laquelle le bras robotisé 2 oriente la zone de fixation.

Le support 4 et le bras robotisé 2 sont fixés sur la table optique 3 à des positions définies. Le support 4 est monté sur la table optique 3 relativement au bras robotisé 2, de sorte à ce que la caméra 1 puisse être positionnée, par le bras robotisé 2, à une distance comprise entre 5 et 100 cm du LIDAR 5, et orientée, par le bras robotisé 2, de sorte à couvrir une demisphère dont le centre de la base est situé au centre de la zone d'émission optique du LIDAR 5..

La caméra comprend un capteur CCD 12 dont le capteur comprend 1.2 Mégapixels et dont la taille des pixels est de 3,75 × 3,75 µm.

La caméra est équipée d'un objectif 13 dont la distance focale est de 50 mm et d'ouverture F/2 donc 25 mm

Le bras robotisé 2 présente une répétabilité angulaire de ±0,02° et une précision de positionnement de 0,1 mm.

Le support comprend un dispositif d'ajustement 41 de l'assiette et de l'azimut d'un plateau 42 sur lequel est fixé le LIDAR 5. Le dispositif d'ajustement 41 est fixé sur la table optique 3. Le dispositif d'ajustement 41 modifie l'assiette et l'azimut du plateau 42 par l'intermédiaire de deux vis de réglage 43,44. L'azimut est réglé de manière précise à l'aide d'un système d'alignement laser. L'assiette est réglée par l'intermédiaire de données mesurées par un inclinomètre du LIDAR 5.

Une unité de traitement (non représentée) est configurée pour contrôlée le bras robotisé 2 et la caméra 1. La zone de fixation est disposée à une position calculée, et orientée selon une direction calculée, par l'unité de traitement, de sorte que l'axe d'alignement 21 de la zone de fixation soit confondu avec l'axe d'émission prévu 61 d'un des faisceaux émis 7, dit premier faisceau, par le LIDAR 5. La position et la direction sont calculées à partir de données relatives aux directions d'émission des faisceaux émis 7 par le LIDAR 5 fournies par le constructeur.

En l'absence d'écart angulaire α entre la position de l'axe d'émission prévu 61 et la position de l'axe d'émission réel 62, et en l'absence d'écart angulaire β entre l'axe optique 9 de la caméra 1 et l'axe d'alignement 21, tous les axes 9,21,61 et 62 devraient être confondus et l'axe d'émission réel 62 devrait être focalisé par l'objectif 13 de la caméra 1 à une position 11 sur le capteur CCD 12 de la caméra 1, la position 11 correspond au centre optique théorique de la caméra 1.

En pratique, lorsque la caméra 1 est montée sur la zone de fixation de l'extrémité du bras robotisé 2, il existe toujours un angle non nul β entre l'axe optique 9 de la caméra 1 et l'axe d'alignement 21 de la zone de fixation du bras robotisé 2. Ainsi, en l'absence d'écart angulaire α entre la position de l'axe d'émission prévu 61 et la position de l'axe d'émission réel 62 mais en présence d'un écart angulaire β entre l'axe optique 9 de la caméra 1 et l'axe d'alignement 21, l'axe d'émission réel 62 est focalisé par l'objectif 13 de la caméra 1 à une position 14 sur le capteur CCD 12 de la caméra 1, la position 14 correspondant à un centre optique 14 de la caméra 1.

En pratique, l'ensemble des paramètres caractérisant les faisceaux optiques émis 7 par le LIDAR 5 doivent être connues avec précision. A cet effet, le LIDAR 5 est étalonné en sortie d'usine. De plus, ces paramètres étant susceptibles de dériver au cours du temps, il est donc nécessaire de les mesurer régulièrement durant la vie du LIDAR. En particulier, un des paramètres parmi les plus sensibles et les plus complexes à mesurer, est la position spatiale des axes d'émission 6 des faisceaux optiques émis 7 par le LIDAR 5. Les distances d'utilisation des LIDARs étant de plusieurs centaines de mètres, un écart angulaire α de quelques dixièmes de degrés entre la position de l'axe d'émission prévu 61 et la position de l'axe d'émission réel 62 peut engendrer des écarts de positions des faisceaux émis 7 de plusieurs mètres au niveau de la cible. En pratique, cet écart angulaire α doit être déterminé pour calibrer l'erreur engendrée par le mauvais positionnement de l'inclinomètre sur le LIDAR 5. Cet écart angulaire α doit également être déterminé pour, lors de la fabrication du LIDAR 6, régler un système optomécanique du LIDAR 5.

Ainsi, en la présence d'un écart angulaire α entre la position de l'axe d'émission prévu 61 et la position de l'axe d'émission réel 62 et en la présence d'un écart angulaire β entre l'axe optique 9 de la caméra 1 et l'axe d'alignement 21, l'axe d'émission réel 62 est focalisé par l'objectif 13 de la caméra 1 à une position 15 sur le capteur CCD 12 de la caméra 1, la position 15 correspondant à la position d'un centre optique réel 15 de la caméra 1.

Dans une première variante du mode de réalisation, après que le bras robotisé 2 est positionné la caméra 1 en alignant l'axe d'alignement 21 avec l'axe d'émission prévu 61, l'unité de traitement acquiert une première position 8 du premier faisceau sur le capteur CCD 12 de la caméra 1. Cette première position 8 est définie par ses coordonnées (ε₁x, ε₁y) sur le capteur CCD 12.

Après acquisition de la première position 8, le bras robotisé 2 fait tourner la caméra 1 par rapport à l'axe d'alignement 21 d'un angle de 180°. L'unité de traitement acquiert une deuxième position 10 du premier faisceau sur le capteur CCD 12 de la caméra 1. Cette deuxième position 10 est définie par ses coordonnées (ε₂x, ε₂y) sur le capteur CCD 12.

Dans une deuxième variante du mode de réalisation, à la suite de l'acquisition de la première position 8 du premier faisceau sur le capteur CCD 12 de la caméra 1, le bras robotisé 2 peut opérer une rotation continue de la caméra 1 autour de l'axe d'alignement 21 et l'unité de traitement peut acquérir de manière continue un ensemble de positions 16 du premier faisceau sur le capteur CCD 12 de la caméra 1. Dans ce cas, l'ensemble des positions 16 décrivent un cercle 16 comprenant les premières 8 et deuxièmes 10 positions.

L'unité de traitement calcule ensuite la position du centre optique réel 15. Selon la première variante, la position du centre optique réel 15 est déterminée par l'unité de traitement en calculant les coordonnées du centre du segment reliant la première 8 à la deuxième 10 position. Selon la deuxième variante, la position du centre optique réel 15 est déterminée par l'unité de traitement en calculant les coordonnées du centre du cercle 16.

L'unité de traitement calcule ensuite la position de l'axe d'émission réel 62 en calculant les coordonnées de l'axe reliant le centre optique 17 de la caméra au foyer optique réel 15.

La détermination du foyer optique réel par rotation de la caméra 1 autour de l'axe d'alignement 21 permet de s'affranchir des erreurs d'alignement et ce quel que soit la précision du capteur optique utilisé. Cette détermination associée à l'utilisation d'un bras robotisé 2 confère un caractère industriel et répétable à la mesure.

Afin de mesurer des écarts angulaires β minimes, les procédés de l'état de la technique visent à positionner la cible à des distances importantes du LIDAR 5 de sorte à engendrer des écarts de positions des faisceaux émis 7 suffisamment importants pour être mesurés par une cible physique déplacée manuellement. Le procédé selon l'invention permet de pouvoir mesurer ces écarts angulaires β minimes en positionnant la caméra 1 à proximité immédiate du LIDAR 5.

Les procédés de mesure manuels connus de l'homme du métier mobilisent deux opérateurs durant 4 à 6 heures de temps. Le dispositif associé au procédé selon l'invention, permet de réaliser des mesures en intérieur en quelques minutes et ne nécessite aucun opérateur pendant la mise en oeuvre du procédé. Le dispositif procure des mesures précises, répétables, qui ne sont pas opérateur dépendant et qui ne dépendent d'aucun facteur extérieur.

Le dispositif selon l'invention permet de déterminer un écart angulaire avec une précision inférieure à 0,05°.

Après avoir déterminé l'axe d'émission réel 62 du premier faisceau, le procédé est appliqué à chacun des faisceaux émis 7 par le LIDAR 5. Les positions réelles des axes d'émission de chacun des faisceaux émis 7 par le LIDAR 5 sont dès lors connues.

L'unité de traitement détermine les différences angulaires des faisceaux émis 7 par le LIDAR entre eux.

A partir des différences angulaires et de la géométrie définie selon laquelle les faisceaux émis 7 ont été mis en forme spatialement, l'unité de traitement détermine un défaut d'inclinaison entre :
- l'assiette dans laquelle le LIDAR 5 a été positionné à partir des données mesurées par l'inclinomètre, et
- un plan horizontal.

L'inclinomètre est calibré à partir du défaut d'inclinaison déterminé.

## Revendications

1. Procédé de mesure de paramètres d'un faisceau optique (7) émis par un LIDAR (5), ledit procédé comprenant :
- un calcul d'une position et d'une direction d'une zone de fixation d'un système de mise en mouvement (2) sur laquelle est fixé un dispositif optique (1), de manière à ce qu'un axe d'alignement (21) de la zone de fixation soit confondu avec un axe d'émission prévu (61) du faisceau optique, le calcul étant réalisé à partir de données relatives à une direction d'émission du faisceau émis par le LIDAR,
- un positionnement de la zone de fixation, par le système de mise en mouvement, relativement au LIDAR, dans la position calculée,
- une mesure d'un ou de plusieurs paramètres du faisceau optique par le dispositif optique.

2. Procédé selon la revendication 1, comprenant une détermination par une unité de traitement, à partir du ou des paramètres mesurés :
- d'un positionnement spatial d'un vecteur représentatif du faisceau optique (7), et/ou
- de caractéristiques spectrales du faisceau optique, et/ou
- de caractéristiques temporelles du faisceau optique, et/ou
- d'un taux de polarisation du faisceau optique, et/ou
- d'une qualité de propagation gaussienne du faisceau optique, et/ou
- de caractéristiques liées à la phase du faisceau optique et/ou
- d'un front d'onde du faisceau optique, et/ou
- d'une efficacité du LIDAR (5), et/ou
- d'une puissance optique du faisceau optique.

3. Procédé selon la revendication 1 ou 2, comprenant :
- une acquisition d'une première position (8) du faisceau optique (5) sur le capteur optique (12) du dispositif optique (1), le dispositif optique étant une caméra,
- au moins une étape de rotation de la zone de fixation par rapport à l'axe d'alignement (21) de la zone de fixation, un axe optique (9) de la caméra (1) décrivant un mouvement de précession autour de l'axe d'émission prévu (61),
- concomitamment ou subséquemment à l'au moins une étape de rotation, une acquisition d'au moins une deuxième position (10) du faisceau optique sur le capteur optique,
- à partir des positions du faisceau optique sur le capteur optique, une détermination d'un écart angulaire (a) entre l'axe d'émission prévu du faisceau optique et un axe d'émission réel (62) du faisceau optique.

4. Procédé selon la revendication 3, comprenant une détermination :
- d'une position d'un foyer optique réel (15) de la caméra (1) sur le capteur optique (12) par l'unité de traitement, la position du foyer optique réel correspondant à la position d'un centre d'un cercle reliant la première (8) et l'au moins une deuxième position (10) du faisceau optique (7) sur le capteur optique,
- de l'axe d'émission réel (62) du faisceau optique, ledit axe comprenant la position du foyer optique réel sur le capteur optique et un centre optique (17) de la caméra.

5. Procédé selon la revendication 3 ou 4, comprenant :
- un ajustement d'une inclinaison du LIDAR (5) au moyen d'un inclinomètre du LIDAR,
- une calibration de l'inclinomètre, au moyen de l'unité de traitement, à partir de l'écart angulaire (a) entre l'axe d'émission prévu (61) du faisceau optique (7) et un axe d'émission réel (62) du faisceau optique déterminé.

6. Procédé selon l'une quelconque des revendications précédentes, dans lequel le LIDAR (5) émet plusieurs faisceaux optiques (7), le procédé étant appliqué de manière successive à chacun desdits faisceaux optiques.

7. Procédé selon la revendication 6, comprenant une détermination, par l'unité de traitement, d'une différence entre un angle prévu entre deux faisceaux optiques (7) et un angle réel entre deux faisceaux optiques.

8. Procédé selon les revendications 3, 4, 6 et 7 comprenant au moins une itération des étapes :
- d'acquisition de la première position (8) du faisceau optique (7) sur le capteur optique (12),
- d'au moins une rotation de la zone de fixation par rapport à l'axe d'alignement (21) de la zone de fixation,
- d'acquisition de l'au moins une deuxième position (10) du faisceau optique sur le capteur optique, et
- de détermination :
• de l'écart angulaire (a) entre l'axe d'émission prévu (61) du faisceau optique et de l'axe d'émission réel (62) du faisceau optique, et/ou
• d'une position d'un foyer optique réel (15) de la caméra (1) sur le capteur optique, et/ou
• de l'axe d'émission réel du faisceau optique et/ou
• de la différence entre l'angle prévu entre deux faisceaux optiques et l'angle réel entre deux faisceaux optiques ;
chaque itération étant réalisée à un positionnement différent de la zone de fixation le long de l'axe d'émission prévu du faisceau optique.

9. Procédé selon l'une quelconque des revendications précédentes, dans lequel :
- le système de mise en mouvement (2) est un système de mise en mouvement à pilotage automatique tel que, entre autre, un bras robotique ou hexapod ou toute plateforme d'inclinaison,
- la zone de fixation est une surface du système de mise en mouvement dont un positionnement et une inclinaison sont contrôlés.

10. Dispositif de mesure de paramètres d'un faisceau optique (7) émis par un LIDAR (5), ledit dispositif de mesure comprenant :
- un support (4) apte à recevoir le LIDAR et agencé pour modifier un positionnement du LIDAR,
le dispositif de mesure étant **caractérisé en ce qu'**il comprend, en outre :
- un système de mise en mouvement (2) à pilotage automatique comportant une zone de fixation apte à être mise en mouvement selon plusieurs axes,
- un dispositif optique (1) fixé à ladite zone de fixation du système de mise en mouvement,
- le système de mise en mouvement est agencé pour positionner la zone de fixation relativement au LIDAR et orienter un axe d'alignement (21) de la zone de fixation de sorte que l'axe d'alignement coïncide avec un axe d'émission prévu (61) du faisceau optique,
- le dispositif optique est agencé pour mesurer un ou des paramètres du faisceau optique.

11. Dispositif selon la revendication 10, comprenant une unité de traitement configurée et/ou programmée pour calculer un axe d'émission prévu (61) du faisceau optique (7), à partir de données relatives à une direction d'émission d'un faisceaux émis par le LIDAR (5).

12. Dispositif selon la revendication 10 ou 11, dans lequel l'unité de traitement est configurée et/ou programmée pour calculer une position et une direction de la zone de fixation pour laquelle l'axe d'alignement (21) de la zone de fixation est aligné avec l'axe d'émission prévu (61) du faisceau optique (7).

13. Dispositif selon l'une quelconque des revendications 10 à 12, dans lequel le système de mise en mouvement (2) à pilotage automatique est un bras robotique ou hexapod ou toute plateforme d'inclinaison et la zone de fixation apte à être mise en mouvement est une surface du système de mise en mouvement, ladite surface étant agencée pour être mise en rotation autour de l'axe d'alignement (21) de la zone de fixation.

14. Dispositif selon l'une quelconque des revendications 10 à 13, dans lequel le support (4) est principalement compris dans un plan et est agencé pour ajuster, entre autre, l'angle formé entre un plan horizontal et le plan dans lequel est compris le support.

15. Dispositif selon l'une quelconque des revendications 10 à 14, dans lequel le dispositif optique (1) est agencé pour mesurer, entres autres :
- un positionnement spatial d'un vecteur représentatif du faisceau optique (7), et/ou
- une ou des caractéristiques spectrales du faisceau optique, et/ou
- une ou des caractéristiques temporelles du faisceau optique, et/ou
- un taux de polarisation du faisceau optique, et/ou
- une qualité de propagation gaussienne du faisceau optique, et/ou
- une ou des caractéristiques liées à la phase du faisceau optiques et/ou
- un front d'onde du faisceau optique, et/ou
- une efficacité du LIDAR (5), et/ou
- une puissance optique du faisceau optique.

16. Dispositif selon l'une quelconque des revendications 10 à 15, dans lequel :
- le dispositif optique (1) est une caméra,
- un axe optique (9) de la caméra décrit un mouvement de précession autour de l'axe de l'alignement (21),
- la caméra est agencée pour :
• mesurer un positionnement spatial d'un vecteur représentatif du faisceau optique,
• être mise en rotation autour de l'axe d'alignement de la zone de fixation,
- l'unité de traitement est configurée et/ou programmé pour déterminer un écart angulaire (a) entre un axe d'émission prévu (61) du faisceau optique (7) et un axe d'émission réel (62) dudit faisceau optique à partir d'au moins deux positions du faisceau émis par le LIDAR sur un capteur optique (12) de la caméra, lesdites au moins deux positions dudit faisceau optique comprenant au moins une position acquise ultérieurement et/ou concomitamment et/ou ou subséquemment à la mise en rotation de la caméra.

17. Dispositif selon la revendication 16, dans lequel l'unité de traitement est configurée et/ou programmée pour déterminer :
- une position d'un foyer optique réel (15) de la caméra (1) sur le capteur optique (12), la position du foyer optique réel correspondant à la position d'un centre d'un cercle reliant lesdites au moins deux positions du faisceau optique sur le capteur optique,
- l'axe d'émission réel (62) du faisceau optique, ledit axe d'émission réel comprenant la position du foyer optique réel sur le capteur optique et un centre optique (17) de la caméra.

18. Dispositif selon la revendication 16 ou 17, dans lequel l'unité de traitement est configurée et/ou programmée pour appliquer l'étape de détermination d'un écart angulaire à un ensemble de faisceaux émis par le LIDAR.

19. Utilisation du dispositif selon la revendication 16 à 18, pour déterminer une différence entre :
- un angle prévu entre deux faisceaux optiques (7) émis par un LIDAR (5), et
- un angle réel entre lesdits deux faisceaux optiques émis par le LIDAR.

20. Utilisation du dispositif selon l'une quelconque des revendications 16 à 19, pour calibrer un inclinomètre d'un LIDAR (5).

## Patentansprüche

1. Verfahren zum Messen von Parametern eines optischen Strahls (7), der von einem LIDAR (5) erzeugt wird, wobei das Verfahren umfasst:
- eine Berechnung einer Position und einer Richtung eines Befestigungsbereichs eines Antriebssystems (2), an dem eine optische Vorrichtung (1) derart befestigt ist, dass eine Ausrichtungsachse (21) des Befestigungsbereichs mit einer vorgesehenen Emissionsachse (61) des optischen Strahls zusammenfällt, wobei die Berechnung anhand von Daten durchgeführt wird, die sich auf eine Emissionsrichtung des vom LIDAR emittierten Strahls beziehen,
- ein Positionieren des Befestigungsbereichs durch das Antriebssystem relativ zum LIDAR in der berechneten Position,
- eine Messung eines oder mehrerer Parameter des optischen Strahls durch die optische Vorrichtung.

2. Verfahren nach Anspruch 1, umfassend eine Bestimmung durch eine Verarbeitungseinheit aus dem oder den gemessenen Parametern:
- einer räumlichen Positionierung eines für den optischen Strahl (7) repräsentativen Vektors, und/oder
- von spektralen Eigenschaften des optischen Strahls, und/oder
- von zeitlichen Eigenschaften des optischen Strahls, und/oder
- einem Polarisationsgrad des optischen Strahls, und/oder
- einer Gaußschen Ausbreitungsqualität des optischen Strahls, und/oder
- von phasenbezogenen Eigenschaften des optischen Strahls, und/oder
- einer Wellenfront des optischen Strahls, und/oder
- einer Effizienz des LIDAR (5), und/oder
- einer optischen Leistung des optischen Strahls.

3. Verfahren nach Anspruch 1 oder 2, umfassend:
- eine Erfassung einer ersten Position (8) des optischen Strahls (5) auf dem optischen Sensor (12) der optischen Vorrichtung (1), wobei die optische Vorrichtung eine Kamera ist,
- mindestens einen Schritt einer Drehung des Befestigungsbereichs in Bezug auf die Ausrichtungsachse (21) des Befestigungsbereichs, wobei eine optische Achse (9) der Kamera (1) eine Präzessionsbewegung um die vorgesehene Emissionsachse (61) beschreibt,
- gleichzeitig mit oder nach dem mindestens einen Schritt der Drehung, eine Erfassung mindestens einer zweiten Position (10) des optischen Strahls auf dem optischen Sensor,
- aus den Positionen des optischen Strahls auf dem optischen Sensor, eine Bestimmung einer Winkelabweichung (a) zwischen der vorgesehenen Emissionsachse des optischen Strahls und einer tatsächlichen Emissionsachse (62) des optischen Strahls.

4. Verfahren nach Anspruch 3, umfassend eine Bestimmung:
- einer Position eines tatsächlichen optischen Fokus (15) der Kamera (1) auf dem optischen Sensor (12) durch die Verarbeitungseinheit, wobei die Position des tatsächlichen optischen Fokus der Position eines Mittelpunkts eines Kreises entspricht, der die erste (8) und die mindestens eine zweite Position (10) des optischen Strahls (7) auf dem optischen Sensor verbindet,
- der tatsächlichen Emissionsachse (62) des optischen Strahls, wobei die Achse die Position des tatsächlichen optischen Fokus auf dem optischen Sensor und ein optisches Zentrum (17) der Kamera umfasst.

5. Verfahren nach Anspruch 3 oder 4, umfassend:
- eine Einstellung einer Neigung des LIDAR (5) mit Hilfe eines Neigungsmessers des LIDAR,
- eine Kalibrierung des Neigungsmessers mittels der Verarbeitungseinheit anhand der Winkelabweichung (a) zwischen der vorgesehenen Emissionsachse (61) des optischen Strahls (7) und einer tatsächlichen Emissionsachse (62) des ermittelten optischen Strahls.

6. Verfahren nach einem der vorhergehenden Ansprüche, wobei das LIDAR (5) mehrere optische Strahlen (7) emittiert und das Verfahren nacheinander auf jeden dieser optischen Strahlen angewendet wird.

7. Verfahren nach Anspruch 6, umfassend eine Bestimmung einer Differenz zwischen einem vorgesehenen Winkel zwischen zwei optischen Strahlen (7) und einem tatsächlichen Winkel zwischen zwei optischen Strahlen durch die Verarbeitungseinheit.

8. Verfahren nach den Ansprüchen 3, 4, 6 und 7, umfassend mindestens eine Iteration der Schritte:
- Erfassen der ersten Position (8) des optischen Strahls (7) auf dem optischen Sensor (12),
- mindestens eine Drehung des Befestigungsbereichs in Bezug auf die Ausrichtungsachse (21) des Befestigungsbereichs,
- Erfassung der mindestens einen zweiten Position (10) des optischen Strahls auf dem optischen Sensor, und
- Bestimmung:
• der Winkelabweichung (a) zwischen der vorgesehenen Emissionsachse (61) des optischen Strahls und der tatsächlichen Emissionsachse (62) des optischen Strahls, und/oder
• einer Position eines tatsächlichen optischen Fokus (15) der Kamera (1) auf dem optischen Sensor, und/oder
• der tatsächlichen Emissionsachse des optischen Strahls, und/oder
• der Differenz zwischen dem vorgesehenen Winkel zwischen zwei optischen Strahlen und dem tatsächlichen Winkel zwischen zwei optischen Strahlen;
wobei jede Iteration bei einer anderen Positionierung des Befestigungsbereichs entlang der vorgesehenen Emissionsachse des optischen Strahls durchgeführt wird.

9. Verfahren nach einem der vorhergehenden Ansprüche, wobei:
- das Antriebssystem (2) ein automatisch gesteuertes Antriebssystem ist, wie beispielsweise unter anderem ein Roboterarm oder ein Hexapod oder jede Art von Neigungsplattform,
- der Befestigungsbereich eine Oberfläche des Antriebssystems ist, deren Positionierung und Neigung gesteuert werden.

10. Vorrichtung zur Messung von Parametern eines optischen Strahls (7), der von einem LIDAR (5) emittiert wird, wobei die Messvorrichtung umfasst:
- eine Aufnahme (4), die geeignet ist, das LIDAR aufzunehmen, und die dazu eingerichtet ist, eine Positionierung des LIDAR zu modifizieren,
wobei die Messvorrichtung **dadurch gekennzeichnet ist, dass** diese ferner umfasst:
- ein automatisch gesteuertes Antriebssystem (2) mit einem Befestigungsbereich, der in mehreren Achsen angetrieben werden kann,
- eine optische Vorrichtung (1), die an dem Befestigungsbereich des Antriebssystems befestigt ist,
- wobei das Antriebssystem dazu eingerichtet ist, den Befestigungsbereich relativ zum LIDAR zu positionieren und eine Ausrichtungsachse (21) des Befestigungsbereichs so auszurichten, dass die Ausrichtungsachse mit einer vorgesehenen Emissionsachse (61) des optischen Strahls zusammenfällt,
- wobei die optische Vorrichtung dazu eingerichtet ist, einen oder mehrere Parameter des optischen Strahls zu messen.

11. Vorrichtung nach Anspruch 10, umfassend eine Verarbeitungseinheit, die dazu konfiguriert und/oder programmiert ist, eine vorgesehene Emissionsachse (61) des optischen Strahls (7) aus Daten zu berechnen, die sich auf eine Emissionsrichtung eines von dem LIDAR (5) emittierten Strahls beziehen.

12. Vorrichtung nach Anspruch 10 oder 11, wobei die Verarbeitungseinheit dazu konfiguriert und/oder programmiert ist, eine Position und eine Richtung des Befestigungsbereichs zu berechnen, bei denen die Ausrichtungsachse (21) des Befestigungsbereichs mit der vorgesehenen Emissionsachse (61) des optischen Strahls (7) ausgerichtet ist.

13. Vorrichtung nach einem der Ansprüche 10 bis 12, wobei das automatisch gesteuerte Antriebssystem (2) ein Roboterarm oder ein Hexapod oder irgendeine Art von Neigungsplattform ist und der antreibbare Befestigungsbereich eine Oberfläche des Antriebssystems ist, wobei die Oberfläche dazu eingerichtet ist, um die Ausrichtungsachse (21) des Befestigungsbereichs gedreht zu werden.

14. Vorrichtung nach einem der Ansprüche 10 bis 13, wobei die Aufnahme (4) im Wesentlichen in einer Ebene liegt und dazu eingerichtet ist, unter anderem den Winkel zwischen einer horizontalen Ebene und der Ebene, in der die Aufnahme liegt, einzustellen.

15. Vorrichtung nach einem der Ansprüche 10 bis 14, wobei die optische Vorrichtung (1) dazu eingerichtet ist, unter anderem zu messen:
- eine räumliche Positionierung eines für den optischen Strahl (7) repräsentativen Vektors, und/oder
- eine oder mehrere spektrale Eigenschaften des optischen Strahls, und/oder
- eine oder mehrere zeitliche Eigenschaften des optischen Strahls, und/oder
- einen Polarisationsgrad des optischen Strahls, und/oder
- eine Eigenschaft der Gaußschen Ausbreitung des optischen Strahls, und/oder
- eine oder mehrere mit der Phase des optischen Strahls in Zusammenhang stehende Eigenschaften, und/oder
- eine Wellenfront des optischen Strahls, und/oder
- eine Effizienz des LIDAR (5), und/oder
- eine optische Leistung des optischen Strahls.

16. Vorrichtung nach einem der Ansprüche 10 bis 15, wobei:
- die optische Vorrichtung (1) eine Kamera ist,
- eine optische Achse (9) der Kamera eine Präzessionsbewegung um die Ausrichtungsachse (21) beschreibt,
- die Kamera dazu eingerichtet ist, um:
• eine räumliche Positionierung eines für den optischen Strahl repräsentativen Vektors zu messen,
• um die Ausrichtungsachse des Befestigungsbereichs gedreht zu werden,
- wobei die Verarbeitungseinheit dazu konfiguriert und/oder programmiert ist, eine Winkelabweichung (a) zwischen einer vorgesehenen Emissionsachse (61) des optischen Strahls (7) und einer tatsächlichen Emissionsachse (62) des optischen Strahls aus mindestens zwei Positionen des vom LIDAR auf einen optischen Sensor (12) der Kamera emittierten Strahls zu bestimmen, wobei die mindestens zwei Positionen des optischen Strahls mindestens eine Position umfassen, die in Folge und/oder gleichzeitig und/oder nach dem Drehen der Kamera erfasst wurde.

17. Vorrichtung nach Anspruch 16, wobei die Verarbeitungseinheit dazu konfiguriert und/oder programmiert ist, zu bestimmen:
- eine Position eines tatsächlichen optischen Fokus (15) der Kamera (1) auf dem optischen Sensor (12), wobei die Position des tatsächlichen optischen Fokus der Position eines Mittelpunkts eines Kreises entspricht, der die mindestens zwei Positionen des optischen Strahls auf dem optischen Sensor verbindet,
- die tatsächliche Emissionsachse (62) des optischen Strahls, wobei die tatsächliche Emissionsachse die Position des tatsächlichen optischen Fokus auf dem optischen Sensor und ein optisches Zentrum (17) der Kamera umfasst.

18. Vorrichtung nach Anspruch 16 oder 17, wobei die Verarbeitungseinheit dazu konfiguriert und/oder programmiert ist, den Schritt der Bestimmung einer Winkelabweichung auf einen Satz von Strahlen anzuwenden, die von dem LIDAR emittiert werden.

19. Verwendung der Vorrichtung nach Anspruch 16 bis 18 zum Bestimmen einer Differenz zwischen:
- einem vorgesehenen Winkel zwischen zwei optischen Strahlen (7), die von einem LIDAR (5) emittiert werden, und
- einem tatsächlichen Winkel zwischen diesen beiden von dem LIDAR emittierten optischen Strahlen.

20. Verwendung der Vorrichtung nach einem der Ansprüche 16 bis 19 zum Kalibrieren eines Neigungsmessers eines LIDAR (5).

## Claims

1. Method for measuring parameters of an optical beam (7) emitted by a LIDAR (5), said method comprising:
- calculating a position and a direction of an attachment zone of a movement system (2) on which an optical device (1) is attached, such that an alignment axis (21) of the attachment zone coincides with an expected emission axis (61) of the optical beam, the calculation being carried out based on data relating to a direction of emission of the beam emitted by the LIDAR,
- positioning the attachment zone, with respect to the LIDAR, in the calculated position,
- measuring one or more parameters of the optical beam by the optical device.

2. Method according to claim 1, comprising determining, by a processing unit, based on the measured parameter or parameters:
- a spatial positioning of a vector representative of the optical beam (7), and/or
- spectral characteristics of the optical beam, and/or
- temporal characteristics of the optical beam, and/or
- a polarization rate of the optical beam, and/or
- a gaussian propagation property of the optical beam, and/or
- characteristics associated with the phase of the optical beam, and/or
- a wave front of the optical beam, and/or
- an efficiency of the LIDAR (5), and/or
- an optical power of the optical beam.

3. Method according to claim 1 or 2, comprising:
- acquiring a first position (8) of the optical beam (5) on the optical sensor (12) of the optical device (1), the optical device being a camera,
- at least one step of rotation of the attachment zone with respect to the alignment axis (21) of the attachment zone, an optical axis (9) of the camera (1) describing a precession movement about the expected emission axis (61),
- concomitantly with or subsequent to the at least one step of rotation, acquiring at least one second position (10) of the optical beam on the optical sensor,
- based on the positions of the optical beam on the optical sensor, determining an angular deviation (α) between the expected emission axis of the optical beam and a real emission axis (62) of the optical beam.

4. Method according to claim 3, comprising determining:
- a position of a real optical focal spot (15) of the camera (1) on the optical sensor (12) by the processing unit, the position of the real optical focal spot corresponding to the position of a centre of a circle linking the first (8) and the at least one second position (10) of the optical beam (7) on the optical sensor,
- the real emission axis (62) of the optical beam, said axis comprising the position of the real optical focal spot on the optical sensor and an optical centre (17) of the camera.

5. Method according to claim 3 or 4, comprising:
- an adjustment of an inclination of the LIDAR (5) by means of an inclinometer of the LIDAR,
- calibration of the inclinometer, using the processing unit, based on the angular deviation (α) between the expected emission axis (61) of the optical beam (7) and a real emission axis (62) of the determined optical beam.

6. Method according to any one of the preceding claims, in which the LIDAR (5) emits several optical beams (7), the method being applied successively to each of said optical beams.

7. Method according to claim 6, comprising determining, by the processing unit, a difference between an expected angle between two optical beams (7) and a real angle between two optical beams.

8. Method according to claims 3, 4, 6 and 7, comprising at least one iteration of the steps of:
- acquiring the first position (8) of the optical beam (7) on the optical sensor (12),
- at least one rotation of the attachment zone with respect to the alignment axis (21) of the attachment zone,
- acquiring the at least one second position (10) of the optical beam on the optical sensor, and
- determining:
• the angular deviation (α) between the expected emission axis (61) of the optical beam and the real emission axis (62) of the optical beam, and/or
• a position of a real optical focal spot (15) of the camera (1) on the optical sensor, and/or
• the real emission axis of the optical beam, and/or
• the difference between the expected angle between two optical beams and the real angle between two optical beams;
each iteration being carried out at a different position of the attachment zone along the expected emission axis of the optical beam.

9. Method according to any one of the preceding claims, in which:
- the movement system (2) is a movement system with automatic control, such as, among others, a robotic arm or hexapod or any inclined platform,
- the attachment zone is a surface of the movement system, positioning and inclination of which are controlled.

10. Device for measuring parameters of an optical beam (7) emitted by a LIDAR (5), said measurement device comprising:
- a support (4) suitable for receiving the LIDAR and arranged to modify a positioning of the LIDAR,
the measurement device being **characterized in that** it also comprises:
- an movement system (2) with automatic control comprising an attachment zone suitable for being moved along several axes,
- an optical device (1) attached to said attachment zone of the movement system,
- the movement system is arranged to position the attachment zone with respect to the LIDAR and to orient an alignment axis (21) of the attachment zone so that the alignment axis coincides with an expected emission axis (61) of the optical beam,
- the optical device is arranged to measure one or more parameters of the optical beam.

11. Device according to claim 10, comprising a processing unit configured and/or programmed to calculate an expected emission axis (61) of the optical beam (7), based on data relating to a direction of emission of a beam emitted by the LIDAR (5).

12. Device according to claim 10 or 11, in which the processing unit is configured and/or programmed to calculate a position and a direction of the attachment zone for which the alignment axis (21) of the attachment zone is aligned with the expected emission axis (61) of the optical beam (7).

13. Device according to any one of claims 10 to 12, in which the movement system (2) with automatic control is a robotic arm or hexapod or any inclined platform and the attachment zone suitable for being moved is a surface of the movement system, said surface being arranged to be rotated about the alignment axis (21) of the attachment zone.

14. Device according to any one of claims 10 to 13, in which the support (4) is mainly comprised in one plane and is arranged to adjust, among others, the angle formed between a horizontal plane and the plane in which the support is comprised.

15. Device according to any one of claims 10 to 14, in which the optical device (1) is arranged to measure, among others:
- a spatial positioning of a vector representative of the optical beam (7), and/or
- one or more spectral characteristic(s) of the optical beam, and/or
- one or more temporal characteristic(s) of the optical beam, and/or
- a polarization rate of the optical beam, and/or
- a gaussian propagation property of the optical beam, and/or
- one or more characteristic(s) associated with the phase of the optical beam, and/or
- a wave front of the optical beam, and/or
- an efficiency of the LIDAR (5), and/or
- an optical power of the optical beam.

16. Device according to any one of claims 10 to 15, in which:
- the optical device (1) is a camera,
- an optical axis (9) of the camera describes a precession movement about the alignment axis (21),
- the camera is arranged to:
• measure a spatial positioning of a vector representative of the optical beam,
• be rotated about the alignment axis of the attachment zone,
- the processing unit is configured and/or programmed to determine an angular deviation (α) between an expected emission axis (61) of the optical beam (7) and a real emission axis (62) of said optical beam based on at least two positions of the beam emitted by the LIDAR on an optical sensor (12) of the camera, said at least two positions of said optical beam comprising at least one position acquired subsequently and/or concomitantly and/or after the camera has been rotated.

17. Device according to claim 16, in which the processing unit is configured and/or programmed to determine:
- a position of a real optical focal spot (15) of the camera (1) on the optical sensor (12), the position of the real optical focal spot corresponding to the position of a centre of a circle linking said at least two positions of the optical beam on the optical sensor,
- the real emission axis (62) of the optical beam, said real emission axis comprising the position of the real optical focal spot on the optical sensor and an optical centre (17) of the camera.

18. Device according to claim 16 or 17, in which the processing unit is configured and/or programmed to apply the step of determining an angular deviation to a set of beams emitted by the LIDAR (5).

19. Use of the device according to claims 16 to 18, for determining a difference between:
- an expected angle between two optical beams (7) emitted by a LIDAR (5), and
- a real angle between said two optical beams emitted by the LIDAR.

20. Use of the device according to any one of claims 16 to 19, for calibrating an inclinometer of a LIDAR (5).
